# EUROPÄISCHE PATENTSCHRIFT

(11) **EP 1 456 560 B1**
(45) Veröffentlichungstag und Bekanntmachung des Hinweises auf die Patenterteilung: **05.10.2005**
(21) Anmeldenummer: 02805734.7
(22) Anmeldetag: 18.12.2002
(51) Int. Cl.: F16G 15/08, B66C 1/66

(54) **ANSCHLAGPUNKT**
STOPPING POINT
POINT DE BUTEE

(30) Priorität: 21.12.2001 DE 10164593
(43) Veröffentlichungstag der Anmeldung: 15.09.2004
(73) Patentinhaber: RUD-Kettenfabrik Rieger & Dietz GmbH u. Co., 73432 Aalen-Unterkochen (DE)
(72) Erfinder: SMETZ, Reinhardt, 86720 Baldingen (DE)
(74) Vertreter: Grünecker, Kinkeldey, Stockmair & Schwanhäusser Anwaltssozietät
(86) Internationale Anmeldenummer: PCT/DE2002/004690
(87) Internationale Veröffentlichungsnummer: WO 2003/056207

(56) Entgegenhaltungen:
- EP-A- 0 654 611
- DE-A- 4 336 779
- DE-C- 138 876
- DE-C- 876 628
- DE-C- 10 062 971

## Beschreibung

### Technisches Gebiet

Die Erfindung betrifft einen Anschlagpunkt mit einer zum Einhängen eines Anschlag- oder Zurrmittels dienenden Anschlussöse und einer zu ihrer Befestigung an einem Gegenstand dienenden Verankerungsschraube, deren Kopf mit einem Ringflansch versehen ist, an dem sich die einem mit einer Bohrung versehenen Sockel aufweisende, drehbar auf der Verankerungsschraube gelagerte-Anschlussöse abstützt.

### Stand der Technik

Ein als sogenannte Ringschraube ausgebildeter Anschlagpunkt der vorstehenden Art ist aus der EP 0654611 B1 bekannt. Bei dem bekannten Anschlagpunkt steht ein sich an den Ringflansch des Kopfes der Verankerungsschraube anschließender zylindrischer Abschnitt leicht über die Unterseite des Sockels der Anschlussöse vor, so dass letztere sich frei um die Längsachse der Verankerungsschraube drehen kann. Die bekannte Lösung zeichnet sich durch eine dem Massenartikelcharakter von Anschlusspunkten Rechnung tragende Einfachheit aus. Mit zunehmendem Gewicht der mittels einschlägiger Anschlagpunkte anzuhebenden Lasten kann es aufgrund der Reibungsverhältnisse zwischen dem Ringflansch und dem Sockel der Öse jedoch zu einer Beeinträchtigung der automatischen Ausrichtung der Anschlussöse in Zugrichtung des jeweils mit der Anschlussöse verbundenen Anschlagmittels kommen.

Zur Reduzierung der Reibungskräfte stützt sich bei einem aus der DE 43 36 779 C2 bekannten Anschlagpunkt eine in Kugeln gelagerte Anschlussöse gegenüber einem buchsenartigen Träger ab, der durch eine hinsichtlich ihrer Abmessungen Standardmaße aufweisende Verankerungsschraube gehalten wird. Diese zweite bekannte Lösung vermag insofern nicht voll zu befriedigen , weil bei ihr der Abstand zwischen der Anschlussöse und der Last vergleichsweise groß ist und bei mehr oder weniger schräg auf die Anschlussöse einwirkenden Kräften die Kippfestigkeit der Anschlussöse zu wünschen übrig lässt.

### Darstellung der Erfindung

Der Erfindung liegt die Aufgabe zugrunde, bei einem Anschlusspunkt der gattungsgemäßen Art die Drehbeweglichkeit der Anschlussöse auch dann sicherzustellen, wenn schwere Lasten gehandhabt werden. Dabei wird gleichzeitig angestrebt, die aufgrund der Nähe des Sockels der Anschlussöse zur Last ohnehin bereits hohe Kippfestigkeit der Anschlussöse bei-schräger Krafteinleitung durch eine besonders zweckmäßige Anordnung und Auswahl der Wälzlager noch zu erhöhen. Diese Aufgabe wird erfindungsgemäß dadurch gelöst, dass bei einem gattungsgemäßen Anschlagpunkt mit der Verankerungsschraube unverlierbar eine Stützscheibe verbunden ist und dass der Sockel der Anschlussöse sich über eine erste Wälzkörperreihe gegen den Ringflansch des Kopfes und über eine zweite Walzkörperreihe gegen die Stützscheibe abstützt.

Bei dem erfindungsgemäßen Anschlagpunkt werden nicht nur die bereits angedeuteten Nachteile der zuvor beschriebenen bekannten Konstruktion eliminiert, die Anordnung der Wälzlager erweist sich darüber hinaus vielmehr als außerordentlich montagefreundlich, da eine Zuführung der Wälzkörper durch besondere Zuführkanäle entbehrlich ist.

Weitere Merkmale und Einzelheiten der Erfindung ergeben sich aus den Unteransprüchen und der nachstehenden Beschreibung einer in der beigefügten Zeichnung dargestellten Ausführungsform der Erfindung.

### Kurze Beschreibung der Zeichnungen

Es zeigen:
- Figur 1: teilweise im Schnitt eine erste Ansicht eines als Ringschraube ausge bildeten Anschlagpunktes und
- Figur 2: eine zweite Ansicht des Anschlagpunktes gemäß Figur 1.

### Wege zur Ausführung der Erfindung

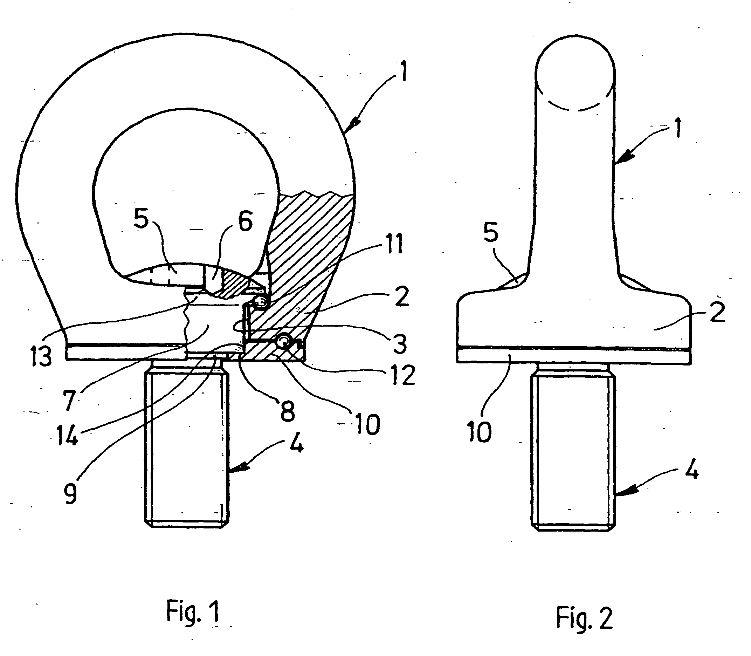

In Figur 1 ist 1 die Anschlussöse eines als Ringschraube ausgebildeten Anschlagpunktes. Die Anschlussöse 1 weist einen Sockel 2 auf, der mit einer Bohrung 3 zur Aufnahme einer Verankerungsschraube 4 versehen ist. Die Verankerungsschraube 4 besitzt einen Kopf 5 der mit einem Innensechskant 6 versehen ist. An den Kopf 5 der Verankerungsschraube 4 schließt sich ein erster zylindrischer Abschnitt 7 an, der über einen schmalen Ringbund 8 in einen zweiten zylindrischen Abschnitt 9 übergeht. dessen Durchmesser kleiner ist als der Durchmesser des ersten zylindrischen Abschnittes 7. Auf den zylindrischen Abschnitt 9 und das untere Ende des zylindrischen Abschnittes 7 ist eine ringförmige Stützscheibe 10 gepresst, die im montierten Zustand des Anschlagpunktes durch die Verankerungsschraube 4 gegen eine Anlagefläche gedrückt wird.

Um ein hohes Maß an Drehbeweglichkeit der Anschlussöse 1 auch bei großen an sie angreifenden Kräften zu gewährleisten, ist der Anschlagpunkt mit zwei von Rillenkugellagern gebildeten Wälzkörperreihen 11, 12 versehen, von denen die Wälzkörperreihe11 zwischen einem Ringflansch 13 des Kopfes 5 der Verankerungsschraube 4 und dem Sockel 2 der Anschlussöse 1 und die Wälzkörperreihe 12 zwischen der Unterseite des Sockels 2 der Anschlussöse 1 und der Stützscheibe 10 angeordnet ist. Der Kippfestigkeit der Anschlussöse 1 kommt es dabei zugute, dass der Durchmesser der Wälzkörperreihe 12 größer ist als der Durchmesser der Wälzkörperreihe 11. Eine Stufenbohurung 14 in der Stützscheibe 10 bildet ein zusätzliche Sicherung gegen Axialverschiebungen zwischen der Verankerungsschraube 4 und der Stützscheibe 10.

## Patentansprüche

1. Anschlagpunkt mit einer zum Einhängen eines Anschlag- oder Zurrmittels dienenden Anchlussöse und einer zu ihrer Befestigung an einem Gegenstand dienenden Verankerungsschraube, deren Kopf mit einem Ringflansch versehen ist, an dem sich die einem mit einer Bohrung versehenen Sockel aufweisende, drehbar auf der Verankerungsschraube gelagerte Anschlussöse abstützt, **dadurch gekennzeichnet, dass** mit der Verankerungsschraube (4) unverlierbar eine Stützscheibe (10) verbunden ist und dass der Sockel (2) der Anschlussöse (1) sich über eine erste Walzkörperreihe (11) gegen den Ringflansch (13) des Kopfes (5) und über eine zweite Walzkörperreihe (12) gegen die Stützscheibe (10) abstützt.

2. Anschlagpunkt nach Anspruch 1, **dadurch gekennzeichnet, dass** sich an den Ringflansch (13) zwei zylindrische Abschnitte (7, 9) anschließen , von denen der dem Ringflansch (13) zugewandte Abschnitt (7) einen größeren Durchmesser hat als der dem Gewinde der Verankerungsschraube (4) zugewandte Abschnitt (9), und dass die Stützscheibe (10) mit einer Stufenbohrung (14) versehen ist, auf deren dem Kopf (5) der Verankerungsschraube (4) abgewandten Stufe sich die Stützscheibe (10) über einen die zylindrischen Abschnitte (7, 9) miteinander verbindenden Ringbund (8) abstützt.

3. Anschlagpunkt nach Anspruch 1 oder 2, **dadurch gekennzeichnet, dass** die Verbindung zwischen der Verankerungsschraube (4) und der Stützscheibe (10) als Presspassverbindung ausgebildet ist

4. Anschlagpunkt nach einem der Ansprüche 1 bis 3, **dadurch gekennzeichnet, dass** die Walzkörperreihen (11, 12) als Rillenkugellager ausgebildet sind.

5. Anschlagpunkt nach einem der Ansprüche 1 bis 4, **dadurch gekennzeichnet, dass** der Durchmesser der ersten Wälzkörperreihe (11) kleiner ist als der Durchmesser der zweiten Wälzkörperreihe (12).

## Claims

1. A point of attachment having a connection eye, into which an attachment or lashing means can be fitted, and an anchoring bolt, which serves for fastening the same on an object and of which the head is provided with an annular flange on which is supported the connection eye, which has a base provided with a bore and is mounted in a rotatable manner on the anchoring bolt, **characterized in that** a supporting disk (10) is connected in captive fashion to the anchoring bolt (4), and **in that** the base (2) of the connection eye (1) is supported, via a first series of rolling-contact bodies (11), against the annular flange (13) of the head (5) and, via a second series of rolling-contact bodies (12), against the supporting disk (10).

2. The point of attachment as claimed in claim 1, **characterized in that** the annular flange (13) is adjoined by two cylindrical sections (7, 9), of which the section (7), which is directed toward the annular flange (13), has a larger diameter than the section (9), which is directed toward the thread of the anchoring bolt (4), and **in that** the supporting disk (10) is provided with a stepped bore (14) and, via an annular collar (8) which connects the cylindrical sections (7, 9) to one another, is supported on the step of the stepped bore which is directed away from the head (5) of the anchoring bolt (4).

3. The point of attachment as claimed in claim 1 or 2, **characterized in that** the connection between the anchoring bolt (4) and the supporting disk (10) is designed as a press-fit connection.

4. The point of attachment as claimed in one of claims 1 to 3, **characterized in that** the series of rolling-contact bodies (11, 12) are designed as grooved ball bearings.

5. The point of attachment as claimed in one of claims 1 to 4, **characterized in that** the diameter of the first series of rolling-contact bodies (11) is smaller than the diameter of the second series of rolling-contact bodies (12).

## Revendications

1. Point de levage comprenant un oeillet de raccord servant à accrocher un moyen de levage ou d'amarrage et une vis d'ancrage servant à fixer ledit oeillet à un objet et dont la tête est munie d'une bride annulaire sur laquelle s'appuie l'oeillet de raccord présentant un socle muni d'un perçage et monté avec faculté de rotation sur la vis d'ancrage, **caractérisé en ce qu'**une rondelle d'appui (10) est reliée de manière imperdable avec la vis d'ancrage (4) et **en ce que** le socle (2) de l'oeillet de raccord (1) s'appuie par l'intermédiaire d'une première rangée de corps de roulement (11) contre la bride annulaire (13) de la tête (5) et par l'intermédiaire d'une seconde rangée de corps de roulement (12) contre la rondelle d'appui (10).

2. Point de levage selon la revendication 1, **caractérisé en ce que** deux tronçons cylindriques (7, 9) viennent se raccorder à la bride annulaire (13), parmi lesquels le tronçon (7) tourné vers la bride annulaire (13) a un diamètre plus grand que le tronçon (9) tourné vers le filetage de la vis d'ancrage (4) et **en ce que** la rondelle d'appui (10) est munie d'un perçage étagé (14) dont l'étage détourné de la tête (5) de la vis d'ancrage (4) sert d'appui à la rondelle d'appui (10) via une collerette annulaire (8) qui relie les tronçons cylindriques (7, 9) entre eux.

3. Point de levage selon la revendication 1 ou 2, **caractérisé en ce que** la liaison entre la vis d'ancrage (4) et la rondelle d'appui (10) est réalisée comme liaison par ajustage serrée.

4. Point de levage selon l'une des revendications 1 à 3, **caractérisé en ce que** les rangées de corps de roulement (11, 12) sont réalisées comme paliers roulements à billes.

5. Point de levage selon l'une des revendications 1 à 4, **caractérisé en ce que** le diamètre de la première rangée de corps de roulement (11) est plus petit que le diamètre de la seconde rangée de corps de roulement (12).
